# FASCICULE DE BREVET EUROPEEN

(11) **EP 2 709 839 B1**
(45) Date de publication et mention de la délivrance du brevet: **25.03.2015**
(21) Numéro de dépôt: 12723443.3
(22) Date de dépôt: 19.05.2012
(51) Int. Cl.: B29D 99/00, B29C 65/48, B29C 70/34, B29C 65/50, B29C 65/02, B29C 65/00, B64C 1/06, B29L 31/30

(54) **PANNEAU COMPOSITE RAIDI DOUBLE FACE ET PROCÉDÉ DE RÉALISATION D'UN TEL PANNEAU**
VERSTEIFTE DOPPELSEITIGE VERBUNDPLATTE SOWIE VERFAHREN ZUR HERSTELLUNG EINER DERARTIGEN PLATTE
DOUBLE-SIDED STIFFENED COMPOSITE PANEL, AND METHOD FOR PRODUCING SUCH A PANEL

(30) Priorité: 19.05.2011 FR 1101547
(43) Date de publication de la demande: 26.03.2014
(73) Titulaire: Daher Aerospace, 41400 Saint Julien De Chedon (FR)
(72) Inventeur: HUGON, Michael, F-44860 Pont Saint Martin (FR); PELARD, Alexandre, F-37400 Amboise (FR); SOUBELET, Diominique, F-37530 Nazelles (FR)
(74) Mandataire: Hamann, Jean-Christophe
(86) Numéro de dépôt international: PCT/EP2012/059316
(87) Numéro de publication internationale: WO 2012/156525

(56) Documents cités:
- EP-A2- 1 149 687
- DE-A1-102008 008 200
- DE-B3-102007 038 926
- US-A- 5 190 773
- US-A- 5 368 807
- US-A1- 2009 283 638

## Description

L'invention concerne un panneau composite raidi double face et un procédé de réalisation d'un tel panneau. Elle est plus particulièrement, mais non exclusivement, adaptée à la réalisation d'un panneau ou d'une structure de coque ne comprenant de pas de surface aérodynamique pour des applications aéronautiques. A titre d'exemple non limitatif, il peut s'agir d'une cloison, d'un déflecteurs ou d'un longeron.

Le panneau objet de l'invention est remarquable en ce qu'il comprend un raidissement croisé assurant sa tenue aux sollicitations de flambage, les raidisseurs étant assemblés à la peau dudit panneau sans aucun élément de fixation tel que des rivets.

Ledit panneau est également remarquable en ce qu'il est constitué d'un matériau composite à renfort fibreux continu dans une matrice thermoplastique, conférant à celui-ci des propriétés de tenue au feu et aux impacts répondants aux exigences aéronautiques.

Selon l'art antérieur, un panneau radi composite est constitué d'une résine thermodurcissable renforcée par des fibres continues. Il comprend une peau raidie, d'une part, par des raidisseurs longitudinaux, dénommés lisses et d'autre part, par des raidisseurs s'étendant selon une direction perpendiculaire à ladite direction longitudinale, généralement sur la même face. Les techniques de mise en oeuvre des matériaux composites ne permettent pas de réaliser ce raidissement croisé par des raidisseur continus en un seul tenant. Ainsi, pour obtenir cette caractéristique, lorsque les raidisseurs sont placés sur la même face du panneau, une première série de raidisseurs, par exemple les raidisseurs longitudinaux, sont co-cuits, collés ou co-drapés avec la peau, les raidisseurs qui leur sont orthogonaux sont, eux, assemblés à la peau par des fixations de type rivets à des taquets ou « *cleats* » eux mêmes rivetés ou collés à la peau. Ce mode de fabrication du panneau implique que celui-ci soit réalisé en plusieurs étapes d'assemblage distinctes. Il entraîne par ailleurs des problèmes spécifiques liés à la faible résistance au matage du matériau composite qui conduit à sur-dimensionner les rivets et à augmenter les épaisseurs au niveau des fixations, et ainsi, à accroître la masse du panneau fini.

Pour résoudre, cet inconvénient de l'art antérieur, lorsque le panneau ne comprend pas de face aérodynamique, les raidisseurs continus orthogonaux sont avantageusement placés sur les deux faces de la peau. Si cette configuration permet de réaliser le raidissement croisé par des raidisseurs continus sans avoir recours à des fixations ou des taquets intermédiaires, lesdits raidisseurs étant placés de part et d'autre de l'épaisseur de peau, la réalisation par drapage direct des raidisseurs ou en rapportant ceux-ci par co-cuisson est très délicate puisqu'elle nécessite la manipulation d'une préforme non consolidée en faisant subir à cette préforme des retournements et à placer et positionner celle-ci dans des outillages complexes. Un tel panneau est alors d'un coût élevé de fabrication et la multiplication des étapes de fabrication sont autant de sources de dispersion susceptibles d'engendrer des défauts de qualité dans sa réalisation.

Le document EP 1 149 687 décrit un panneau composite raidi à raidissement croisé selon le préambule de la revendication 1 et son procédé de fabrication.

L'invention résout les inconvénients de l'art antérieur en proposant un panneau raidi à raidissement croisé selon la revendication 1.

Dans tout le texte, terme peau désigne une pièce plane ou en forme de coque dont l'épaisseur est, en ordre de grandeur, inférieure à 1/1000^{ème} de la plus petite dimension définissant sa surface. petite dimension définissant sa surface.

Ainsi, le panneau objet de l'invention peut être réalisé à partir d'éléments, peau et raidisseurs, consolidés, faciles à manipuler et pouvant être assemblés sans fixation. Cependant, la présence de raidisseurs sur les deux faces rend difficile cette opération d'assemblage. En effet, celle-ci nécessite de porter le matériau à une température au moins égale à la température de fusion de la résine et à appliquer une pression de contact à l'interface entre les raidisseurs et la peau. Placés dans ces conditions, tant les raidisseurs que la peau peuvent subir un décompactage conduisant à des défauts de qualité tels que des essorages de résine dans les zones soumises à la pression nécessaire à la soudure ou à des distorsions de forme du fait du cisaillement introduit par les pressions appliquées aux interfaces avec les raidisseurs sur les deux faces opposées de la peau.

Ces difficultés sont encore amplifiées si les résines constituant la peau ou les raidisseurs sont sujettes au foisonnement à leur température de fusion. C'est pourquoi l'invention concerne également un procédé pour la réalisation d'un tel panneau raidi selon la revendication 2.

Ainsi, la soudure est réalisée en portant l'ensemble peau et raidisseurs à une température Tf₂ à laquelle ils conservent leur cohésion. La miscibilité des résines assure une forte cohésion de l'interface entre la peau et les raidisseurs.

L'invention peut être mise en oeuvre selon les modes de réalisation avantageux exposés ci-après, lesquels peuvent être considérés individuellement ou selon toute combinaison techniquement opérante.

Selon un mode de réalisation du panneau objet de l'invention, la première et la deuxième directions sont orthogonales. Ainsi, le panneau est particulièrement résistant aux sollicitations de flambage.

Avantageusement, au moins l'un des raidisseurs est lié à la peau par deux surfaces parallèles. Un tel raidisseur présente une meilleure stabilité au déversement et au flambage. Cette caractéristique n'est généralement pas réalisable dans le cas d'un raidisseur assemblé à la peau par rivetage, du fait de la trop faible distance entre les rivets liant chacune des faces du raidisseurs, laquelle distance n'est pas compatible avec la constitution composite de la peau.

Selon un mode de réalisation avantageux du procédé objet de l'invention, l'étape d) dudit procédé comprend l'intégration d'une couche constituée de la deuxième résine sur les surfaces des raidisseurs en contact avec la peau. Ainsi la soudure est plus facilement réalisée et la cohésion d'interface améliorée.

Selon ce même mode de réalisation avantageux du procédé objet de l'invention, les raidisseurs sont obtenus par estampage d'un flan pré-consolidé et la couche de deuxième résine est également mise en forme lors de cette opération d'estampage. La réalisation des raidisseurs par estampage est particulièrement productive et, en partant de flans pré-consolidés, limite le risque de défaut dans les raidisseurs. La nature des deux résines permet d'intégrer facilement la résine présentant la température de fusion la plus faible lors de l'estampage et ainsi d'obtenir, d'une part, une forte cohésion de cette couche avec le reste de la pièce et d'autre part, d'assurer la continuité de ladite couche sur toute la surface de contact entre le raidisseur et la peau.

Avantageusement, le procédé objet de l'invention comprend entre les étapes d) et e) une étape consistant à :
f. placer une bande constituée de la deuxième résine sur la peau à l'emplacement des raidisseurs avant l'application desdits raidisseurs sur ladite peau.

Cette étape permet d'améliorer la qualité de la soudure et de compenser les éventuels légers défauts d'alignement entre la position effective des raidisseurs et la position des zones comprenant la seconde résine réalisées lors de la fabrication de la peau.

Avantageusement, la première résine est un polyétheréthercétone et la deuxième résine un polyétherimyde. Ces deux résines, présentent les caractéristiques i) à iii) requises et présentent de plus l'avantage d'un comportement au feu et de résistance aux agressions chimiques compatibles avec les applications aéronautiques.

Selon un mode de réalisation adapté à la fabrication d'un panneau devant résister à des produits chimiques particulièrement agressifs tels que des esters phosphatés utilisés comme fluide hydraulique pour les applications aéronautiques, le procédé objet de l'invention comprend après l'étape e) une étape consistant à :
g. déposer un agent d'étanchéité sur le bord des raidisseurs à leur interface avec la peau.

Ainsi la soudure est protégée des éventuelles attaques chimiques pouvant résulter d'un déversement de tels fluides sur le panneau objet de l'invention.

Un outillage pour la mise en oeuvre du procédé objet de l'invention est présenté, dans le but de réaliser un panneau comprenant au moins un raidisseur comportant des surfaces parallèles de soudure avec la peau, ledit outillage comprenant un noyau gonflable apte à être inséré entre les surfaces parallèles du raidisseur en contact avec la peau et à l'intérieur dudit raidisseur.

Ainsi, la pression nécessaire à la soudure peut être appliquée de part et d'autre de la peau sans risquer l'effondrement dudit raidisseur, ledit noyau étant facilement retiré après l'opération de soudage.

L'invention est exposée ci-après selon ses modes de réalisation préférés, nullement limitatifs et en référence aux figures 1 à 5 dans lesquelles :
- la figure 1 est une vue en perspective et de dessus d'un exemple de réalisation d'un panneau raidi selon l'invention, la peau dudit panneau étant représentée transparente ;
- la figure 2 est une vue en éclaté de face selon une coupe A-A définie figure 1, de l'assemblage des raidisseurs avec la peau selon un exemple de réalisation de l'invention ;
- la figure 3 est une vue de face de l'extrémité d'un panneau selon un exemple de réalisation de l'invention, comprenant des cordons de mastic d'étanchéité sur les bords des interfaces entre les raidisseurs et la peau du dit panneau ;
- la figure 4 est un synoptique d'une exemple de réalisation du procédé objet de l'invention ;
- et la figure 5 est une vue de face de l'extrémité d'un panneau au cours de l'opération de soudage des raidisseurs sur la peau.

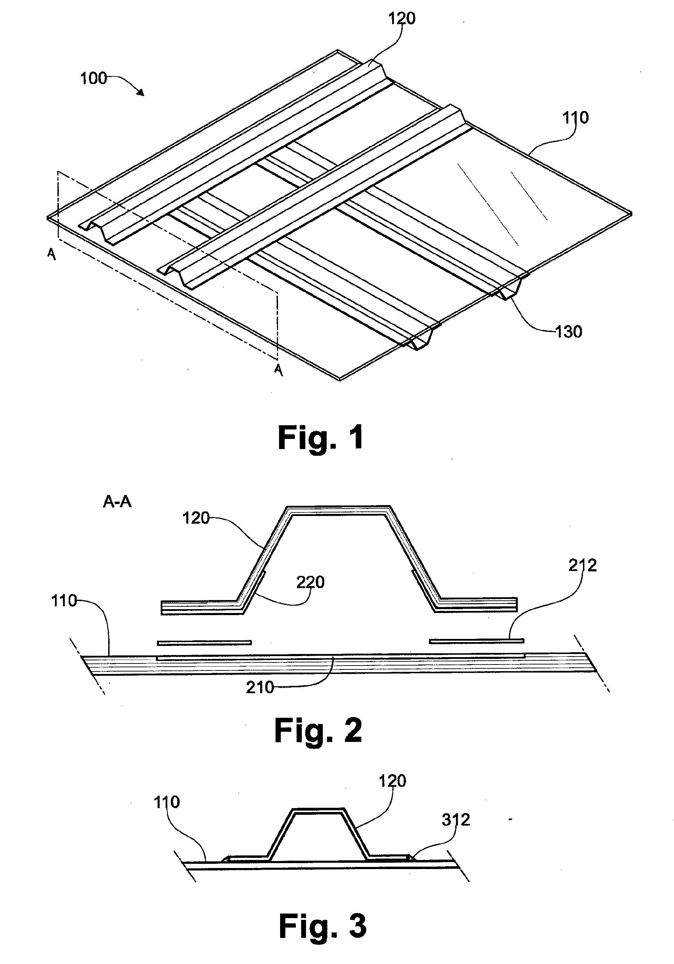

Figure 1, selon un exemple de réalisation d'un panneau (100) raidi selon l'invention, ledit panneau comprend une peau (110) ici représentée plane mais qui peut prendre toute forme en simple ou double courbure, avec des rayons de courbure supérieurs en ordre de grandeur à 1000 fois l'épaisseur de ladite peau. Ladite peau (110) est selon un exemple avantageux de réalisation constituée d'une stratification de plis de fibres de carbone continues dans une matrice thermoplastique de polyétheréthercétone tel qu'un composite PEEK APC2/AS4. Cette peau est raidie par des raidisseurs (120) s'étendant selon une première direction sur une des faces de la peau et par des raidisseurs (130) s'étendant dans une direction perpendiculaire à cette première direction sur la face opposée de la peau. Selon ce mode de réalisation avantageux les raidisseurs (120, 130) sont en forme d'Ω (lettre grecque oméga) liés à la peau par deux surfaces d'appui parallèles l'une à l'autre. Lesdits raidisseurs (120, 130) sont avantageusement constitués de plis de fibres de carbone dans une matrice polyéthertéthercétone, obtenus par estampage d'un flan pré-consolidé.

Figure 2, selon une vue en coupe, la peau (110) est obtenue par la consolidation d'un empilement de plis poudrés de résine ou calandrés par un film de résine thermoplastique. Lors de l'opération de drapage de la peau, un film (210) d'une résine miscible dans cette première résine est intégré à l'empilement avant de réaliser le compactage-consolidation de l'ensemble. À titre d'exemple, cette bande de résine est constituée de polyétherimyde par exemple de type Ultem® 5000 distribuée par la société GE Plastics. La consolidation-compactage de la peau (110) est réalisée à la température de fusion Tf₁ de la résine polyétheréthercétone entrant dans la constitution de la peau (110). Un tel film (220) est également intégré aux raidisseurs (120, 130) au niveau de leurs faces destinées à être soudées avec la peau (110). Selon un exemple de réalisation avantageux, ledit film est déposé sur le flan pré-consolidé, lequel est estampé à chaud pour réaliser ledit raidisseur. Une telle opération d'estampage est réalisée à une température égale ou supérieure à la température de fusion Tf₁ de la résine constituant ledit flan. La température de fusion Tf₂ des films (210, 220) de polyétherimyde, placés tant sur la peau que sur le raidisseur, étant inférieure à la température Tf₁, ledit film (210, 220) est fondu, tant lors de l'opération de compactage-consolidation de la peau que lors de l'opération d'estampage du raidisseur (120, 130). Ledit film (210, 220) étant choisi de composition au moins partiellement miscible dans la résine constituant la peau (110) et les raidisseurs (120, 130) il se crée une forte cohésion de cette zone enrichie en polyétherimyde tant avec la peau qu'avec le raidisseur. Avant de réaliser la soudure du raidisseur (120,130) avec la peau (110), selon un mode de réalisation avantageux, un film (212) supplémentaire de polyétherimyde est introduit entre les surfaces en contact du raidisseur (120, 130) et de la peau (110).

Figure 3, à l'issue du soudage des raidisseurs (120, 130) les bords des soudures sont protégés par un cordon (312) de mastic à base de caoutchouc et de polysulfures, tel qu'un mastic distribué sous la dénomination commerciale PR par la société Le Joint Français® et apte à résister aux esters phosphatés tels que les produits Skydrol® ou Hyjet® utilisés comme fluides hydrauliques pour les applications aéronautiques.

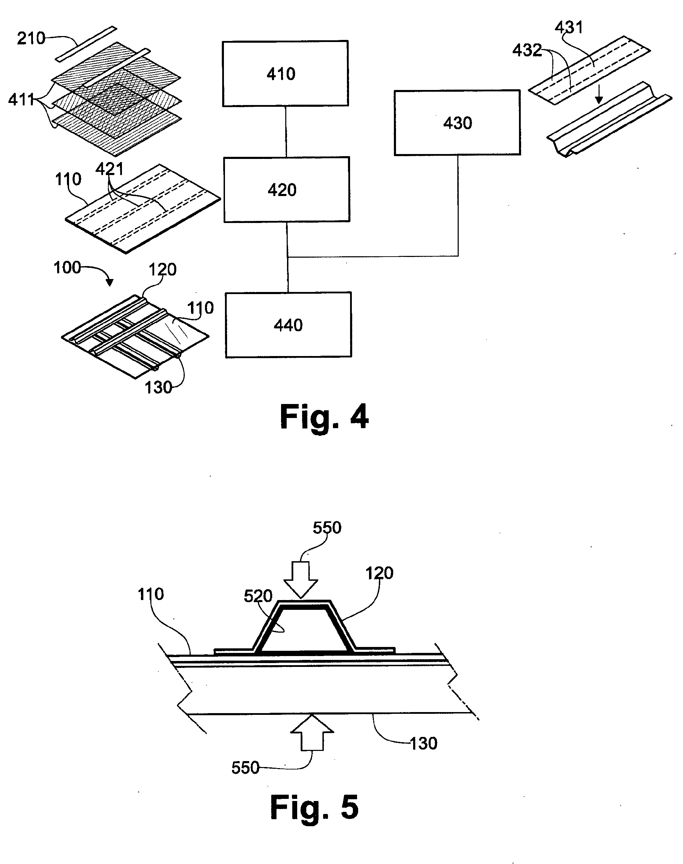

Figure 4, le procédé objet de l'invention comprend ainsi, selon un exemple de réalisation, une première étape (410) consistant à draper des plis (411) de fibres de carbone imprégnées d'une résine thermoplastique avantageusement constituée de polyétheréthercétone ou PEEK, ayant une température de fusion Tf₁, et en plaçant localement des bandes (210) de polyétherimyde ou PEI, de température de fusion Tf₂, aux emplacements destinés à recevoir des raidisseurs.

L'empilement de plis (411) est consolidé et compacté au cours d'une étape (420) de consolidation, réalisée à une température supérieure ou égale à Tf₁. À l'issue de cette étape de consolidation, la peau (110) se trouve sous la forme d'un panneau dont la composition comprend des zones (421) localement enrichies en polyétherimyde.

Parallèlement, les raidisseurs sont réalisés au cours d'une étape (430) d'estampage, de flans (431) pré-consolidés.

La peau (110) et les raidisseurs (120, 130) sont assemblés par soudage au cours d'une étape (440) d'assemblage de sorte à constituer un panneau raidi (100). Cette étape de soudure est réalisée à une température égale ou supérieure à Tf₂ mais inférieure à Tf₁ de sorte que les raidisseurs (120,130) et la peau (110) conservent leur cohésion au cours de ladite opération de soudage.

Figure 5, dans le cas de l'utilisation de raidisseurs (120, 130) sensiblement en forme d'Ω, et s'étendant selon des directions orthogonales sur chacune des faces de la peau (110), le soudage est réalisé en appliquant une pression (550) sur les raidisseurs (120, 130) laquelle pression doit être drainée de part et d'autre de la peau (110). Or, bien que la température de soudage soit inférieure à la température de fusion Tf₁ de la résine constituant majoritairement les raidisseurs (120, 130) et la peau (110), la température de soudage Tf₂ est néanmoins suffisante pour réduire la rigidité de ces éléments. Aussi, afin d'éviter que lesdits raidisseurs ne s'effondrent sous l'effet de cette pression, des noyaux gonflables (520) sont introduits dans l'espace interne entre lesdits raidisseurs et la peau (110) afin de soutenir les ailes desdits raidisseurs soumises à la pression (550).

La description ci-avant et les exemples de réalisation montrent que l'invention atteint les objectifs visés. En particulier, elle permet la réalisation économique en une seule étape d'un panneau composite raidi en double face par des raidisseurs croisés continus sans utiliser d'éléments de fixation.

## Revendications

1. Panneau (100) raidi à raidissement croisé comprenant :
a. une peau (110) stratifiée étendant selon deux directions constituée d'une résine thermoplastique et d'un renfort fibreux continu ;
b. un premier raidisseur (120) sous la forme d'un profilé, constitué d'une résine thermoplastique renforcée par un renfort fibreux continu et lié intimement à la peau (110) par une soudure, lequel premier raidisseur s'étend sur une première face de ladite peau (110) selon une première direction ;
c. un deuxième raidisseur (130) sous la forme d'un profilé constitué d'une résine thermoplastique renforcée par un renfort fibreux continu et lié intimement à la peau (110) par une soudure ;
d. **caractérisé en ce que** lequel deuxième raidisseur s'étend sur une seconde face de ladite peau (110) selon une deuxième direction.

2. Procédé pour la réalisation d'un panneau (100) raidi à raidissment croisé selon la revendication 1, comprenant les étapes consistant à :
a. draper (410) la peau (110) à partir d'un renfort fibreux (411) imprégné d'une première résine thermoplastique présentant une première température de fusion Tf₁ ;
b. intégrer dans le drapage sur les faces extérieures de ladite peau (110) et à l'emplacement futur des raidisseurs une bande (210) d'un film d'une deuxième résine thermoplastique, laquelle deuxième résine :
i. est au moins partiellement miscible dans la première résine ;
ii. présente une température de fusion Tf₂<Tf₁ ;
iii. n'est pas dégradée lorsqu'elle est portée à une température Tf₁
c. compacter (420) et consolider la peau ainsi drapée
d. réaliser (430) les raidisseurs à partir d'un renfort fibreux continu imprégné de la première résine ;
e. assembler (440) la peau et les raidisseurs tous deux à l'état compacté consolidé en appliquant une pression (550) de contact sur lesdits raidisseurs posés sur la peau (110) aux emplacements (421) prévus et en portant l'ensemble à une température Tf₂ de sorte à réaliser une soudure.

3. Panneau selon la revendication 1, **caractérisé en ce que** la première et la deuxième directions sont orthogonales.

4. Panneau selon la revendication 1, **caractérisé en ce qu'**au moins l'un des raidisseurs (120, 130) est lié à la peau par deux surfaces parallèles.

5. Procédé selon la revendication 2, **caractérisé en ce que** l'étape d) comprend l'intégration d'une couche (220) constituée de la deuxième résine sur les surfaces des raidisseurs (120, 130) en contact avec la peau (110).

6. Procédé selon la revendication 5, **caractérisé en ce que** les raidisseurs (120, 130) sont obtenus par estampage d'un flan (431) pré-consolidé et que la couche de deuxième résine est également mise en forme lors de cet opération (430) d'estampage.

7. Procédé selon la revendication 2, **caractérisé en ce qu'**il comprend entre les étapes d) et e) une étape consistant à :
f. Placer une bande (212) constituée de la deuxième résine sur la peau (110) à l'emplacement des raidisseurs (120, 130) avant l'application desdits raidisseurs sur ladite peau.

8. Procédé selon la revendication 2, **caractérisé en ce que** la première résine est un polyétheréthercétone et la deuxième résine un polyétherimyde.

9. Procédé selon la revendication 2, **caractérisé en ce qu'**il comprend après l'étape e) une étape consistant à :
g. déposer un agent (312) d'étanchéité sur le bord des raidisseurs (120, 130) à leur interface avec la peau (110).

## Patentansprüche

1. Versteifte Platte (100) mit gekreuzter Versteifung, umfassend:
a. eine Presshaut (110), die sich in zwei Richtungen erstreckt und aus einem Thermoplastharz sowie einer durchgehenden Faserverstärkung besteht;
b. einen ersten Versteifer (120) in Form eines Profilteils, der aus einem mit einer durchgehenden Faserverstärkung verstärkten Thermoplastharz besteht und der durch eine Schweißnaht eng mit der Haut (110) verbunden ist, wobei sich dieser erste Versteifer auf einer ersten Seite der Haut (110) entlang einer ersten Richtung erstreckt;
c. einen zweiten Versteifer (130) in Form eines Profilteils, der aus einem mit einer durchgehenden Faserverstärkung verstärkten Thermoplastharz besteht und der durch eine Schweißnaht eng mit der Haut (110) verbunden ist;
d. **dadurch gekennzeichnet, dass** sich der zweite Versteifer auf einer zweiten Seite dieser Haut (110) entlang einer zweiten Richtung erstreckt.

2. Verfahren zur Herstellung einer versteiften Platte (100) mit gekreuzter Versteifung nach Anspruch 1, das folgende Schritte umfasst:
a. Drapieren (410) der Haut (110) ausgehend von einer Faserverstärkung (411), die mit einem ersten Thermoplastharz imprägniert ist, welches eine erste Schmelztemperatur Tf₁ aufweist;
b. Einfügen in die Drapierung auf den Außenseiten dieser Haut (110) und an der künftigen Anordnungsstelle der Versteifer eines Streifens (210) einer Folie eines zweiten Thermoplastharzes, wobei dieses zweite Kunstharz :
i. zumindest teilweise mit dem ersten Kunstharz vermischbar ist;
ii. eine Schmelztemperatur Tf₂ < Tf₁ aufweist;
iii. nicht abgebaut wird, wenn es auf eine Temperatur Tf₁ gebracht wird
c. Pressen (420) und Verfestigen der so drapierten Haut
d. Herstellen (430) der Versteifer ausgehend von einer durchgehenden Faserverstärkung, die mit dem ersten Kunstharz imprägniert ist;
e. Zusammenfügen (440) der Haut und der Versteifer, die beide in einem gepressten und verfestigten Zustand sind, indem auf die Versteifer ein Kontaktdruck (550) ausgeübt wird, welche an den vorgesehenen Anordnungsstellen (421) auf der Haut (110) aufgelegt sind und indem das Ganze auf eine Temperatur Tf₂ erhitzt wird und somit ein Verschweißen erfolgt.

3. Platte nach Anspruch 1, **dadurch gekennzeichnet, dass** die erste und zweite Richtung orthogonal sind.

4. Platte nach Anspruch 1, **dadurch gekennzeichnet, dass** mindestens einer der Versteifer (120, 130) durch zwei parallele Flächen mit der Haut verbunden ist.

5. Verfahren nach Anspruch 2, **dadurch gekennzeichnet, dass** der Schritt d) das Einfügen einer aus dem zweiten Harz bestehenden Schicht (220) auf den Oberflächen der Versteifer (120, 130) und in Kontakt mit der Haut (110) umfasst.

6. Verfahren nach Anspruch 5, **dadurch gekennzeichnet, dass** die Versteifer (120, 130) durch Stanzen eines vorgefestigten Rohlings (431) erzielt werden und dass die zweite Harzschicht ebenfalls bei diesem Stanzvorgang (430) in Form gebracht wird.

7. Verfahren nach Anspruch 2, **dadurch gekennzeichnet, dass** es zwischen den Schritten d) und e) einen Schritt umfasst, der besteht aus dem:
f. Anordnen eines aus dem zweiten Harz bestehenden Streifens (212) auf der Haut (110) an der Anordnungsstelle der Versteifer (120, 130), bevor die Versteifer auf dieser Haut aufgetragen werden.

8. Verfahren nach Anspruch 2, **dadurch gekennzeichnet, dass** das erste Harz ein Polyetheretherketon und das zweite Harz ein Polyetherimid ist.

9. Verfahren nach Anspruch 2, **dadurch gekennzeichnet, dass** es nach dem Schritt e) folgenden Schritt umfasst:
g. Auftragen einer Dichtungsmasse (312) auf den Rand der Versteifer (120, 130) an ihrer Verschmelzfläche mit der Haut (110).

## Claims

1. A stiffened panel (100) with a cross stiffening comprising:
a. a laminated skin (110) extending in two directions, made of a resin and a continuous fiber reinforcement;
b. a first stiffener (120) in the form of a beam made of a resin with continuous fiber reinforcement, said first stiffener extending on a first side of said skin (110) in a first direction;
c. a second stiffener (130) in the form of a beam made of a thermoplastic resin with continuous fiber reinforcement, tightly bonded to the skin (110) by welding ;
d. **characterized in that** said second stiffener extends of a second face of said skin (110) according to a second direction.

2. A method for producing the stiffened panel with cross stiffening according to claim 1, comprising the steps consisting in:
a. drape forming (410) the skin from a fiber reinforcement (411) impregnated with a first thermoplastic resin having a first melting temperature Tf₁;
b. integrating in the drape forming on the outer sides of said skin (110) and at the future location of the stiffeners, a band (210) of film of a second thermoplastic resin, said second resin:
i. being at least partly miscible in the first resin;
ii. having a melting temperature Tf₂ < Tf₁;
iii. not being degraded when it is taken to a temperature Tf₁
c. compacting (420) and consolidating the skin that has thus been drape formed
d. making (430) the stiffeners from a continuous fibers reinforcement impregnated with the first resin;
e. assembling (440) the skin and the stiffeners, both in the compacted consolidated state, by applying a contact pressure on said stiffeners placed on the skin (110) at the intended locations (421) and by raising the temperature of the assembly to a temperature Tf₂ so as to make a weld.

3. The panel according to claim 1, wherein the first and second directions are orthogonal.

4. The panel according to claim 1, wherein at least one of the stiffeners (120, 130) is joined to the skin by two parallel surfaces.

5. The method according to claim 2, wherein step d) comprises the integration of a layer (220) made of the second resin on the surfaces of the stiffeners (120, 130) in contact with the skin (110).

6. The method according to claim 5, wherein the stiffeners are made by stamping a pre-consolidated blank (431) the layer of second resin is also formed during that stamping operation (430).

7. The method according to claim 2, comprising, between steps (d) and (e), a step consisting in:
f. placing a strip (212) made of the second resin on the skin (110) at the location of the stiffeners (120, 130) before said stiffeners are applied to said skin.

8. The method according to claim 2, wherein the first resin is a polyetheretherketone and the second resin is a polyetherimide.

9. The method according to claim 2, comprising after step (e) a step consisting in:
g. depositing a sealing agent (312) on the edges of the stiffeners (120, 130) at their interface with the skin (110).
